# EUROPÄISCHE PATENTSCHRIFT

(11) **EP 0 532 889 B1**
(45) Veröffentlichungstag und Bekanntmachung des Hinweises auf die Patenterteilung: **14.12.1994**
(21) Anmeldenummer: 92113363.3
(22) Anmeldetag: 05.08.1992
(51) Int. Cl.: F16L 5/02, H02G 3/22, A62C 2/06

(54) **Vorrichtung zur Brandabschottung einer Wandöffnung für die Durchführung von Leitungen**
Fire barrier device through a wall opening for the penetration of conduits
Dispositif coupe-feu placé dans l'ouverture d'une paroi pour la traversée de conduits

(30) Priorität: 19.09.1991 DE 4131146
(43) Veröffentlichungstag der Anmeldung: 24.03.1993
(73) Patentinhaber: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(56) Entgegenhaltungen:
- EP-A- 0 360 004
- DE-A- 2 737 978
- NL-A- 8 302 140

## Beschreibung

Die Erfindung betrifft eine Vorrichtung zur Brandabschottung einer Wandöffnung für die Durchführung von Leitungen, wie elektrische Kabel, Rohre oder dergl., durch eine Wand, bestehend aus einem abgedichtet gegen die Wand in der Wandöffnung angeordneten, die Leitungen in einer Durchführungsöffnung aufnehmenden Schottkasten, ferner aus auf beiden Seiten der Wand zum Abdecken der Durchführungsöffnung vorgesehenen Schottwänden, und aus einem im Schottkasten befindlichen Intumeszenzmaterial, das die Durchführungsöffnung erst im Brandfall ausfüllt und dabei sein ursprüngliches Volumen infolge von Wärmeeinwirkung entsprechend vergrößert (siehe DE-U-90 11 952).

Vorrichtungen dieser Art besitzen den Vorteil, daß sich die Durchführungsöffnung erst im Brandfall schließt, vorher aber immer offen ist, und daß daher Änderungen oder Ergänzungen in der Leitungsbelegung der Durchführungsöffnung ohne Bohr- oder Stemmarbeiten an der Wand oder am Schottkasten vorgenommen werden können.

Bei bekannten Vorrichtungen dieser Art (vgl. beispielsweise die Firmendruckschrift der Asea Brown Boveri AG "Schottung von Wand- und Deckendurchbrüchen", ABB - ZST 31 (12.88 1000 HD) Seite 5) ist der Schottkasten ein auf beiden Seiten der Wand offener Stahlblechkasten, dessen Wände innenseitig mit aus dem Intumeszenzmaterial bestehenden Blöcken, nämlich luftdicht gekapselten PALUSOL-Blöcken, ausgekleidet sind, die zwischen sich die Durchführungsöffnung bilden. Die Schottwände sind von Polystyrol-Kappen gebildet, die mit passenden Öffnungen für die einzelnen Leitungen versehen und mit einem geeigneten dauerelastischen Dichtstoff gegen den Schottkasten und gegen die Leitungen verfugt werden müssen. Unter Wärmeeinwirkung im Brandfall schäumt das Intumeszenzmaterial auf und verschließt dadurch die nach der Leitungsbelegung noch frei gebliebenen Teile der Durchführungsöffnung. Die Polystyrol-Kappen entfalten im Brandfall keine nennenswerte Brandschutzwirkung; sie dienen nur zum zug- und rauchdichten Verschluß der Durchführungsöffnung, so lange sie vor einem Brandfall durch das Intumeszenzmaterial noch nicht verschlossen ist.

Der Einsatzbereich dieser bekannten Vorrichtungen ist beschränkt. Der Schottkasten kann im Innenmaß seines Querschnitts nicht nennenswert größer als etwa 70 x 240 mm sein, weil sonst die Menge des Intumeszenzmaterials, die im Schottkasten untergebracht werden kann, nicht ausreichen würde, um im Brandfall die Durchführungsöffnung wirklich zuverlässig zu schließen.

Der Erfindung liegt die Aufgabe zugrunde, eine Vorrichtung der eingangs genannten Art so auszubilden, daß auch bei größeren und großen Querschnittsinnenmaßen der Durchführungsöffnung genügende Mengen an Intumeszenzmaterial zur Verfügung stehen, um im Brandfall den sicheren Verschluß der Durchführungsöffnung zu gewährleisten.

Diese Aufgabe wird nach der Erfindung dadurch gelöst, daß für jede Schottwand eine quer zur Leitungsrichtung angeordnete, feststehende und die Durchführungsöffnung freilassende Stirnwand mit einer zur Durchführungsöffnung hin offenen Tasche vorgesehen ist, daß in der Tasche die als Formteil aus Intumeszenzmaterial ausgebildete Schottwand bewegbar in die Durchführungsöffnung hinein geführt und von einer in Führungsrichtung wirkenden Antriebskraft beaufschlagt ist, und daß für jede Schottwand eine Halteeinrichtung vorgesehen ist, welche die Schottwand gegen die Wirkung der Antriebskraft in der Tasche festhält und erst im Brandfall ihre Bewegung aus der Tasche in die Durchführungsöffnung freigibt, wobei diese Freigabe bei niedrigerer Temperatur erfolgt als die Volumenvergrößerung des Intumeszenzmaterials.

Im Ergebnis bilden die Schottwände bei der erfindungsgemäßen Vorrichtung einen zusätzlichen Vorrat an Intumeszenzmaterial, der sich in den Taschen der Stirnwände befindet und daher auch bei größerer Dicke der Schottwände die Größe des für die Leitungsbelegung zur Verfügung stehenden Innenquerschnitts der Durchführungsöffnung nicht beeinträchtigt. Erst im Brandfall, jedoch noch ehe das Intumeszenzmaterial aufschäumt, bewegen sich die Schottwände aus den Taschen in die Durchführungsöffnung und vergrößern dadurch die in der Durchführungsöffnung zu ihrem Verschluß zur Verfügung stehende Menge an Intumeszenzmaterial. Dabei sind die Schottwände durch ihre Anordnung an beiden Enden der Durchführungsöffnung besonders brandschutzwirksam.

Zweckmäßigerweise wird die Anordnung so getroffen, daß sich die Schottwände auch in ihrer Endstellung, in der sie am weitesten in die Durchführungsöffnung hinein vorstehen, noch mit den Stirnwänden in den Taschen teilweise überlappen, und daß im Überlappungsbereich Abdichtungen zwischen der Schottwand und der Stirnwand vorgesehen sind. Dadurch wird verhindert, daß die Bewegung der Schottwände in die Durchführungsöffnung hinein die Rauch- oder Brandausbreitung fördernde Undichtigkeiten gegenüber den Stirnwänden und dem Schottkasten erzeugen kann. Vorzugsweise sind die Taschen für die Schottwände oberhalb der Durchführungsöffnung angeordnet und die Schottwände in den Taschen in senkrechter Richtung verschiebbar. Das hat den Vorteil, daß das Gewicht der Schottwände ihre Bewegung in die Durchführungsöffnung hinein im Sinne einer entsprechenden Antriebskraft bewirkt oder eine schon vorhandene Antriebskraft noch unterstützt. Außerdem paßt sich die Verstellung der Schottwände in die Durchführungsöffnung hinein von selbst der jeweiligen Leitungsbelegung an, da die Verstellung erst ihr Ende findet, wenn sich die Schottwände mit ihrem unteren Rand auf die in der Durchführungsöffnung liegenden Leitungen aufsetzen.

Eine im Rahmen der Erfindung besonders bevorzugte Ausführungsform ist dadurch gekennzeichnet, daß die Schottwände mit Hohlräumen versehen sind, die aus Feststoff bestehendes
Intumeszenzmaterial von schütt- oder rieselfähiger Beschaffenheit enthalten, und daß sich die Hohlräume beim Austreten der Schottwände aus den Taschen nach unten selbsttätig öffnen und das Intumeszenzmaterial in die Durchführungsöffnung austreten lassen. Das ist mit dem großen Vorteil verbunden, daß das schütt- oder rieselfähige Intumeszenzmaterial in alle Zwischenräume zwischen den Leitungen selbst, zwischen diesen und einer sie eventuell tragenden Leitungspritsche, sowie zwischen einer solchen Leitungspritsche und den Wänden der Durchführungsöffnung gelangen und diese Zwischenräume abdichtend ausfüllen kann. Wird dann im übrigen entsprechend einem weiteren Vorschlag der Erfindung dafür gesorgt, daß die Menge des Intumeszenzmaterials in den Hohlräumen der Schottwände so groß ist, daß es bei vollständig in die Durchführungsöffnung vorstehenden Schottwänden die Durchführungsöffnung im Bereich jeder Schottwand bis mindestens zur Höhe des unteren Schottwandrandes ausfüllt, so ergibt sich ein völlig rauchdichter Verschluß der Durchführungsöffnung gegen die Schottwände und im Ergebnis auch gegen die Stirnwände und den Schottkasten bereits schon dann, wenn das Intumeszenzmaterial selbst noch gar nicht aufgeschäumt ist. Die auf diese Weise erreichbare Rauchdichtigkeit macht die bei den bekannten Vorrichtungen erforderlichen Polystyrol-Kappen entbehrlich, wodurch sich Änderungen der Leitungsbelegung weiter vereinfachen, weil das Anpassen der Polystyrol-Kappen an die geänderte Leitungsbelegung und das neue Verfugen der Kappen entfallen. Auch ist es möglich, eine Leitungspritsche überhaupt durch die Durchführungsöffnung hindurchlaufen zu lassen, ohne dadurch den wirksamen Brandabschluß der Durchführungsöffnung im Brandfall zu gefährden.

Alle schon beschriebenen Vorteile der Erfindung können noch weiter dadurch ausgebaut werden, daß der Schottkasten zwischen den Stirnwänden als Behältnis ausgebildet ist, das ebenfalls aus Feststoff bestehendes Intumeszenzmaterial von schütt- oder rieselfähiger Beschaffenheit enthält, und daß der die Durchführungsöffnung nach oben begrenzende Boden des Behältnisses sich im Brandfall öffnet und das Intumeszenzmaterial nach unten in die Durchführungsöffnung austreten läßt, wobei die Öffnung des Bodens schon bei niedrigerer Temperatur als die Volumenvergrößerung des Intumeszenzmaterials erfolgt. Dadurch wird die Dichtigkeit nicht nur im Bereich der Schottwände, sondern über die gesamte Länge der Durchführungsöffnung hinweg vewirklicht, und zwar auch dann, wenn in den Schottwänden selbst kein solches schütt- oder rieselfähiges Intumeszenzmaterial vorgesehen ist. Darüber hinaus wird die im Brandfall in der Durchführungsöffnung zu deren Verschluß zur Verfügung stehende Menge an Intumeszenzmaterial so vergrößert, daß sich Blöcke aus diesem Material, welche die Wände der Durchführungsöffnung auskleiden und den für die Belegung mit Leitungen verfügbaren Öffnungsquerschnitt verringern, überhaupt erübrigen. Zweckmäßig erfolgt dabei die Öffnung des Bodens erst anschließend an die Freigabe der Schottwände, so daß im Brandfall die schon in die Durchführungsöffnung hinein verstellten Schottwände verhindern, daß das aus dem Behältnis in die Durchführungsöffnung eintretende Intumeszenzmaterial in Leitungslängsrichtung aus der Durchtrittsöffnung auslaufen und für die Branddämmung verloren gehen kann. Auch hier empfiehlt es sich im Sinne einer möglichst wirksamen Rauchdichtigkeit im übrigen, daß die Menge des Intumeszenzmaterials im Behältnis so groß ist, daß es bei geöffnetem Boden die Durchführungsöffnung schon vor seiner Volumenvergrößerung bis mindestens zur Höhe des Bodens hin ausfüllt.

Um eine einwandfreie, gleichmäßige und schnelle Überführung des schütt- oder rieselfähigen Intumeszenzmaterials aus dem Behältnis in die Durchführungsöffnung hinein sicher zu stellen, ist erfindungsgemäß weiter vorgesehen, daß der Innenraum des Behältnisses die Gestalt eines aufrechten Prismas besitzt und eine den Prismenquerschnitt ausfüllende, im Innenraum verschiebbar geführte Querplatte aufnimmt, die auf dem schütt- oder rieselfähigen Intumeszenzmaterial aufliegt und sich beim Öffnen des Bodens mit dem sich im Behältnis absenkenden Intumeszenzmaterial abwärts bewegt. Die Querplatte fördert nicht nur die Überführung des Materials, sondern dichtet zugleich den vom Material frei gewordenen Teil des Behältnisses gegen die Durchführungsöffnung hin ab. Zweckmäßigerweise ist die Querplatte ein aus hartem Brandschutzmaterial bestehendes Formteil, das unter der Wirkung einer abwärts gerichteten Federkraft steht. Letzteres beschleunigt die Überführung des schütt- oder rieselfähigen Intumeszenzmaterials in die Durchführungsöffnung hinein, während die Ausführung der Querplatte aus Brandschutzmaterial die Brandwiderstandsdauer der Vorrichtung insgesamt weiter vergrößert.

Das Öffnen des Bodens des Behältnisses im Brandfall kann auf verschiedene Weise, beispielsweise durch Zerstören des Bodens, wie Aufreißen, Aufschneiden oder dergl., erfolgen.

Um aber das Öffnen des Bodens genau steuern zu können, sieht die Erfindung als bevorzugte Ausführungsform vor, daß der Boden mit über seine gesamte Fläche raster- oder siebartig angeordneten Austrittsöffnungen für das schütt- oder rieselfähige Intumeszenzmaterial versehen und zum Öffnen und Schließen der Austrittsöffnungen ein am Schottkasten parallel zum Boden geführter, aus der Schließstellung in die Offenstellung steuerbarer Verschlußschieber vorgesehen ist. Zweckmäßigerweise ist der in Führungsrichtung aus der Schließstellung in die Offenstellung von einer Stellkraft beaufschlagte Verschlußschieber durch Riegelglieder in der Schließstellung gehalten, die im Brandfall ausgelöst werden und die Bewegung des Verschlußschiebers in die Offenstellung freigeben. Es empfiehlt sich, zur Betätigung der Riegelglieder auf Wärme und/oder Rauch ansprechende Stellglieder vorzusehen.

Diese Stellglieder können auch zur Auslösung der Schottwände herangezogen werden. In diesem Fall betätigen die Stellglieder zusätzliche Riegelglieder, die als Teil der Halteeinrichtung für die Schottwände diese in den Taschen festhalten. Eine hierfür bevorzugte Ausführungsform ist dadurch gekennzeichnet, daß die Stellglieder erste und zweite Zylinderkolbenanordnungen umfassen, daß bei den ersten Zylinderkolbenanordnungen je ein Zylinderraum mit einem sich in der Wärme stark ausdehnenden Treibmaterial gefüllt ist und der jeweils andere Zylinderraum über ein druckübertragendes Medium mit einem Zylinderraum einer der zweiten Zylinderkolbenanordnungen in Verbindung steht, deren Kolben gegen die Kraft des Mediums durch eine Vorspannfeder abgestützt ist, und daß die Kolben der ersten Zylinderkolbenanordnungen die Riegelglieder für die Schottwände und die Kolben der zweiten Zylinderkolbenanordnungen die Riegelglieder für den Verschlußschieber betätigen, so daß sich die Schottwände im Ergebnis eher verstellen als der Verschlußschieber. Die ersten und zweiten Zylinderkolbenanordnungen können in einem gemeinsamen Zylinderblock ausgebildet sein, der sich am Schottkasten, vorzugsweise dicht oberhalb der Durchführungsöffnung befindet, so daß er der im Brandfall in der Durchführungsöffnung entstehenden Wärme unmittelbar ausgesetzt ist. Als Treibmaterial kann Aluminiumhydroxid Al(OH)₃ dienen, das sich unter Wärmeeinwirkung in endothermer Reaktion unter Abspalten von Wasser zersetzt und dabei sein Volumen insgesamt wesentlich vergrößert.

Statt dessen können die Halteeinrichtungen für die Schottwände aber auch aus am Schottkasten angeordneten, elektrisch versorgten Haftmagneten und aus an den Schottwänden angeordneten Haftgegenplatten bestehen, wobei im Versorgungskreis der Haftmagnete ein elektrischer Schalter liegt, der durch auf Wärme und/oder Rauch ansprechende Brandmelder steuerbar ist. Die Brandmelder können, insbesondere in der Ausführungsform als Rauchmelder, entfernt vom Schottkasten angeordnet und über elektrische Leitungen mit dem elektrischen Schalter verbunden sein, was die Anordnung der Brandmelder an beliebigen, insbesondere auch besonders gefährdeten Orten der durch die Wand begrenzten Räumlichkeiten ermöglicht. An Stelle derart angeordneter Brandmelder oder ergänzend zu ihnen können auch an den Stirnwänden des Schottkastens Brandmelder angeordnet sein, die einen sich in der Wärme ausdehnenden Stoff enthalten, der durch seine Ausdehnung mechanisch den ebenfalls am Schottkasten angeordneten elektrischen Schalter steuert. Derart durch Brandmelder gesteuerte Schottwände können in einfacher Weise ihrerseits den Verschlußschieber für den Boden des Behältnisses steuern. Eine dafür besonders bevorzugte Ausführungsform ist dadurch gekennzeichnet, daß eine der Schottwände als Riegelglied für den Verschlußschieber dient, wobei der Verschlußschieber durch einen Anschlag in der Schließstellung gehalten ist, der von der Schottwand gebildet ist und die Bewegung des Verschlußschiebers in die Offenstellung freigibt, wenn sich die Schottwand in der Durchführungsöffnung verstellt. Insbesondere besteht die Möglichkeit, daß der Verschlußschieber durch eine Aussparung in der Seitenwand hindurch unmittelbar an der Schottwand abgestützt ist und daß in der Schottwand eine Einsenkung vorgesehen ist, in die der Verschlußschieber bei der Abwärtsverstellung der Schottwand so tief eintreten kann,' wie es für seine Verstellung in die Offenstellung erforderlich ist. Auf diese Weise ergibt es sich gleichsam von selbst, daß immer erst die Schottwände schließen, ehe sich der Boden des Behältnisses öffnen kann.

Im übrigen sind in einer weiteren vorteilhaften Ausführungsform der Erfindung auf beiden Seiten der Wand am Schottkasten nach unten in die Durchführungsöffnung hängende Schürzen vorgesehen, die mit dem unteren freien Rand auf den Leitungen liegen, und die die Durchführungsöffnung in Leitungsrichtung nach außen abdecken. Diese Schürzen bieten in einfacher Weise Zugfreiheit der Vorrichtung, so lange die Durchtrittsöffnung noch offen ist und die Schottwände sich in ihren Taschen befinden. Zweckmäßigerweise sind die Schürzen im Bereich ihres den Leitungen aufliegenden Randes in Leitungsrichtung einwärts gebogen, um im Brandfall zu verhindern, daß aus den Schottwänden austretendes schütt- oder rieselfähiges Intumeszenzmaterial in Leitungslängsrichtung aus der Durchführungsöffnung auslaufen kann und für die Abschottung verloren geht. Auch empfiehlt es sich, die Schürzen an den Stirnwänden des Schottkastens in Gelenken zu halten, in denen die Schürzen nach außen und oben gegen die Stirnwände verschwenkbar sind, in welcher Stellung sie beispielsweise eingerastet werden können, damit sie nicht stören, wenn Belegungsarbeiten in der Durchführungsöffnung aufgeführt werden. Die Schürzen bestehen vorteilhaft aus Glasvlies, Glasgewebe oder aus einem Kupferdrahtgewebe, wobei letzteres mit dem Vorteil eines besonders wirksamen Flammenschutzes und rascher Wärmeableitung verbunden ist. Im übrigen können die Schürzen an ihrem unteren Rand Fransen tragen, die zwischen die Leitungen fallen und dadurch die Abdeckung und Zugfreiheit weiter verbessern.

Das schütt- oder rieselfähige Intumeszenzmaerial im Behältnis des Schottkastens und/oder in den Hohlräumen der Schottwände kann Siliziumdioxid SiO₂ und eine Beimischung aus Aluminiumhydroxid Al(OH)₃ enthalten. Das Intumeszenzmaterial im Behältnis kann aus mehreren, bei ihrer Mischung miteinander aufschäumenden Stoffkomponenten bestehen, für die im Behältnis voneinander abgeteilte Kammern ausgebildet sind, so daß die Stoffkomponenten erst miteinander reagieren können, wenn sie durch den sich öffnenden Boden in die Durchführungsöffnung gelangen und sich dabei dort miteinander vermischen. Die Schottwände, der Boden des Behältnisses, der Verschlußschieber und die Querplatte sind zweckmäßigerweise als harte Formteile aus in der Hitze aufschäumendem Brandschutzmaterial ausgebildet. Weiter empfiehlt es sich, daß der Schottkasten einschließlich der Stirnwände aus einem Werkstoff auf der Basis von Calciumsilikat besteht. Dabei können die Stirnwände an der Außenseite mit einem Hitzeschild, insbesondere aus Aluminiumfolie, belegt sein. Im übrigen ist zweckmäßigerweise der Schottkasten gegen die Wand durch zwischen beiden angeordnete elastische Matten aus Brandschutz-Schaumstoff abgedichtet.

Im folgenden wird die Erfindung anhand von in der Zeichnung dargestellten Ausführungsbeispielen näher erläutert; es zeigen:
- Fig. 1: eine Abschottungsvorrichtung in einem senkrechten Schnitt in Leitungslängsrichtung,

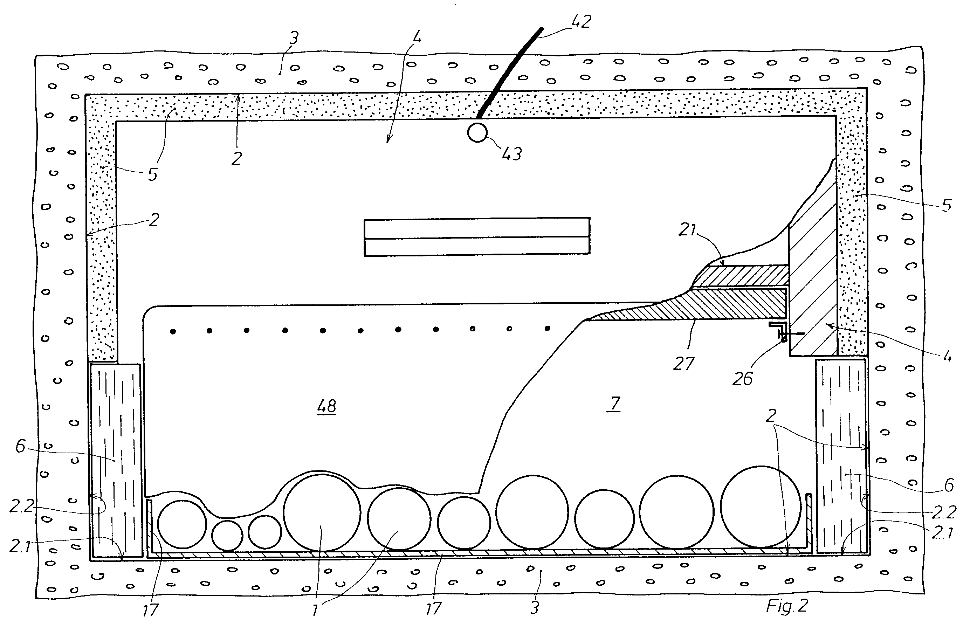

- Fig. 2: den Gegenstand der Fig. 1 in einer Vorderansicht, teils im Schnitt,
- Fig. 3: eine andere Ausführungsform der Abschottungsvorrichtung in einer der Fig. 1 entsprechenden Darstellung,
- Fig. 4: eine Stellgliedanordnung zur wärmeabhängigen Steuerung der Vorrichtung nach Fig. 3,
- Fig. 5: eine nochmals andere Ausführungsform einer erfindungsgemäßen Abschottungsvorrichtung, wiederum in einer der Fig. 1 entsprechenden Darstellung.

Die in der Zeichnung dargestellten Vorrichtungen dienen zur Brandabschottung einer Wandöffnung 2 für die Durchführung von Leitungen 1, wie elektrische Kabel, Rohre oder dergl., durch eine Wand 3. Die Vorrichtung umfaßt einen in der Wandöffnung 2 angeordneten Schottkasten 4, zwischen dem und der Wand 3 eine Abdichtung 5 vorgesehen ist. Der Schottkasten 4 ist auf der unteren Laibungsfläche 2.1 der Wandöffnung 2 durch Blöcke 6 aus verfestigter Steinwolle abgestützt, die sich entlang der seitlichen Laibungswände 2.2 der Wandöffnung erstrecken. Zwischen diesen Blöcken 6 bildet der Schottkasten 4 eine Durchführungsöffnung 7 für die Leitungen 1. Der Schottkasten 4 besitzt quer zur Leitungsrichtung angeordnete, feststehende und die Durchführungsöffnung 7 frei lassende Stirnwände 8 mit einer nach unten zur Durchführungsöffnung hin offenen Tasche 9, in der als Formteil aus Intumeszenzmaterial ausgebildete Schottwände 10 senkrecht bewegbar in die Durchführungsöffnung 7 geführt sind, wobei sie ergänzend zu ihrem eigenen Gewicht von in Führungsrichtung auf sie einwirkenden, für ihre Verstellung eine zusätzliche Antriebskraft erzeugenden Federn 11 beaufschlagt sind. Für jede Schottwand 10 ist eine allgemein mit 12 bezeichnete Halteeinrichtung vorgesehen, welche die Schottwand 10 gegen die Wirkung der Antriebskraft in der Tasche 9 festhält und erst im Brandfall ihre Bewegung aus der Tasche in die Durchführungsöffnung 7 frei gibt. Diese Freigabe der Schottwände 10 erfolgt bei niedrigerer Temperatur als die Volumenvergrößerung des Intumeszenzmaterials, so daß letzteres erst stattfinden kann, wenn sich die Schottwände 10 vollständig in die Durchführungsöffnung 7 hinein verstellt haben. Die Schottwände 10 sind mit Abdichtungen 13 versehen, die sie in den Taschen 9 gegen die Stirnwände 8 abdichten. Im übrigen sind die Schottwände 10 in Bezug auf die Höhe der Durchführungsöffnung 7 so groß, daß die Schottwände 10 auch in ihrer Endstellung, in der sie am weitesten in die Durchführungsöffnung 7 hinein vorstehen, sich in den Taschen 9 noch mit den Stirnwänden 8 teilweise überlappen, wobei die Abdichtungen 13 sich dann in diesem Überlappungsbereich befinden. Diese Abdichtungen 13 verhindern, daß sich bei in die Durchführungsöffnung 7 hinein vorverstellten Schottwänden 10 Undichtigkeiten in den Taschen 9 auf einem Wege um die Schottwände herum ergeben können.

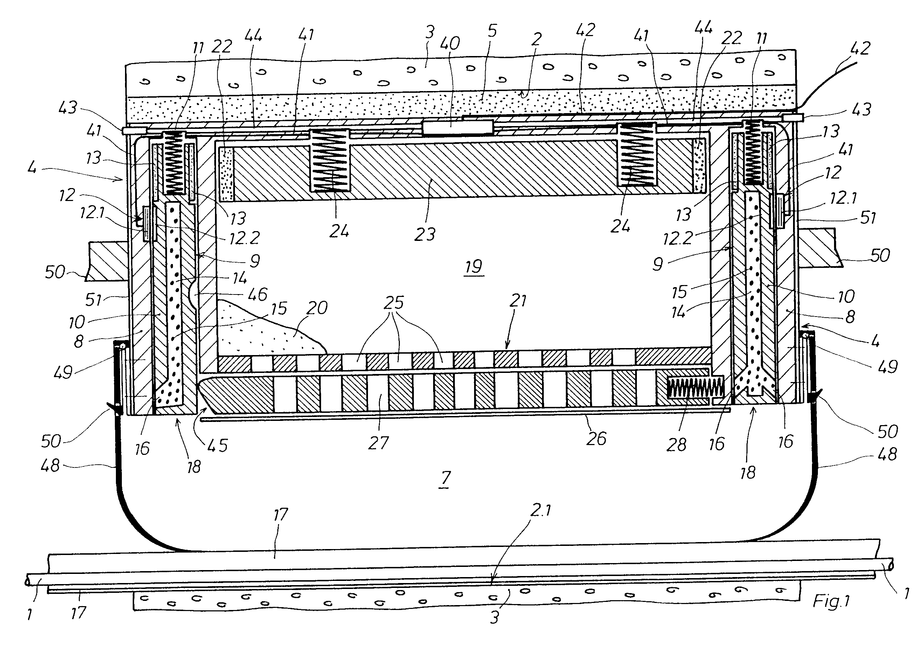

Im Ausführungsbeispiel nach Fig. 1 sind die Schottwände 10 mit Hohlräumen 14 versehen, die in der Zeichnung durch Punktierung 15 angedeutetes, aus Feststoff bestehendes Intumeszenzmaterial von schütt- oder rieselfähiger Beschaffenheit enthalten. Diese Hohlräume 14 besitzen an den Stirnwänden 8 liegende Mündungen 16 und öffnen sich daher beim Austreten der Schottwände 10 aus den Taschen 9 nach unten hin selbsttätig und lassen das Intumeszenzmaterial 15 in die Durchführungsöffnung 7 austreten. Es füllt dann die Zwischenräume zwischen den Leitungen 1 untereinander, zwischen den Leitungen 1 und einer sie tragenden Leitungspritsche 17 sowie zwischen der Leitungspritsche und den Begrenzungsflächen 2.1, 2.2 der Durchtrittsöffnung 7 und Wandöffnung 2. Dabei ist die Menge des Intumeszenzmaterials 15 in den Hohlräumen 14 der Schottwände 10 so groß, daß es bei vollständig in die Durchführungsöffnung 7 vorstehenden Schottwänden 10 die Durchführungsöffnung 7 im Bereich jeder Schottwand bis mindestens zur Höhe des unteren Schottwandrandes 18 auffüllt, wodurch sich ein in Leitungslängsrichtung dichter Abschluß der Durchführungsöffnung 7 ergibt, und zwar auch dann schon, ehe das Intumeszenzmaterial unter Wärmeeinwirkung aufschäummt und sein Volumen vergrößert.

Weiter ist der Schottkasten 4 in allen Ausführungsbeispielen zwischen den Stirnwänden 8 als Behältnis 19 ausgebildet, das ebenfalls durch teilweise Punktierung 20 angedeutetes, aus Feststoff bestehendes Intumeszenzmaterial von schütt- oder rieselfähiger Beschaffenheit enthält. Der die Durchführungsöffnung 7 nach oben hin begrenzende Boden 21 dieses Behältnisses 19 öffnet sich im Brandfall und läßt das Intumeszenzmaterial 20 nach unten in die Durchführungsöffnung 7 hin austreten. Die Öffnung des Bodens 21 erfolgt dabei schon bei niedrigerer Temperatur als die Volumenvergrößerung des Intumeszenzmaterials 20. Auch ist die Anordnung so getroffen, daß die Öffnung des Bodens 21 erst anschließend an die Freigabe der Schottwände 10 erfolgt, so daß die Durchführungsöffnung 7 stirnseitig durch die Schottwände 10 bereits geschlossen ist, wenn sie aus dem Behältnis 19 mit dem darin enthaltenen schütt- oder rieselfähigen Intumeszenzmaterial aufgefüllt wird. Die Menge des Intumeszenzmaterials 20 im Behältnis 19 ist dabei so groß, daß das Material bei geöffnetem Boden 21 die Durchführungsöffnung 7 schon vor seiner Volumenvergrößerung bis mindestens zur Höhe des Bodens 21 ausfüllt, so daß Rauchdichtigkeit auch hier schon vor dem Aufschäumen des Intumeszenzmaterials erhalten wird.

Der Innenraum des Behältnisses 19 besitzt die prismatische Gestalt eines Quaders und nimmt eine den Querschnitt des Quaders ausfüllende, gegen die Wand des Innenraums durch einen elastischen Streifen 22 abgedichtete Querplatte 23 auf, die sich unter dem Druck von Federn 24 im Innenraum abwärts verschieben kann, wobei sie auf dem schütt- oder rieselfähigen Intumeszenzmaterial 20 aufliegt und sich beim Öffnen des Bodens 21 mit dem sich dann im Behältnis 19 absenkenden Intumeszenzmaterial abwärts bewegt. Diese Querplatte 23 besteht aus hartem Brandschutzmaterial und sorgt für eine gleichmäßige und schnelle Überführung des Intumeszenzmaterials 20 aus dem Behältnis 19 in die Durchführungsöffnung 7, sowie im Brandfall durch ihre eigene Volumenvergrößerung zur Füllung des Behältnisses 19.

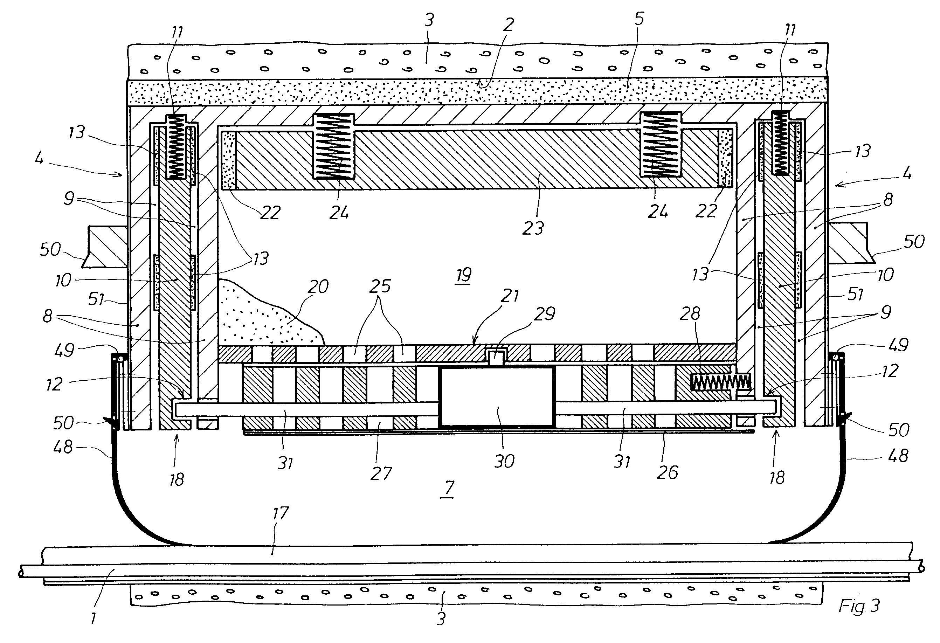

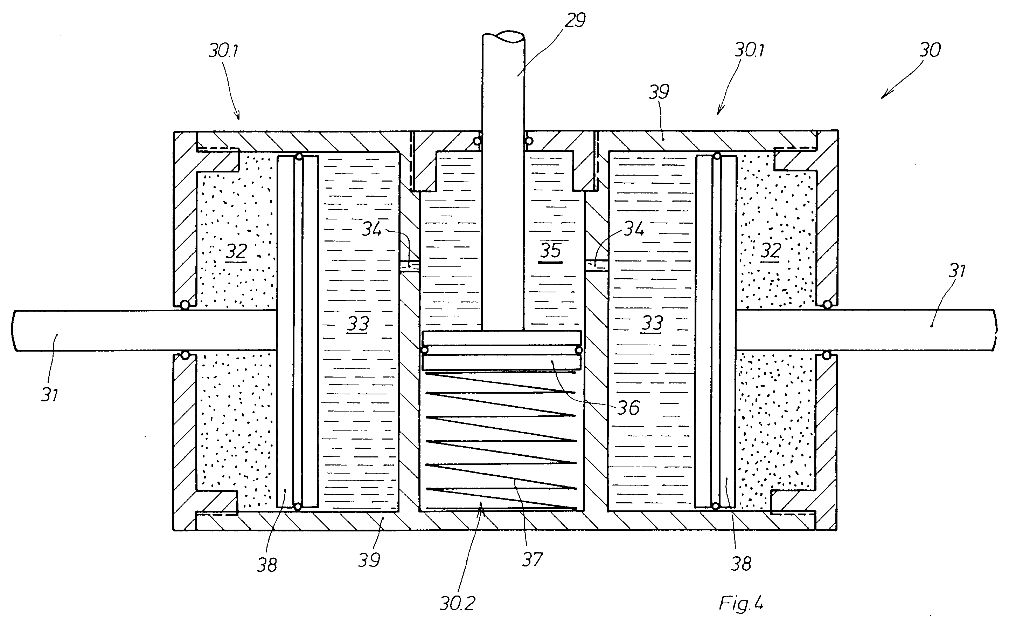

Der Boden 21 ist über seine gesamte Fläche mit sieb- oder rasterartig angeordneten Austrittsöffnungen 25 für das schütt- oder rieselfähige Intumeszenzmaterial 20 versehen. Zum Öffnen und Schließen dieser Austrittsöffnungen 25 dient ein am Schottkasten 4 in Schienen 26 parallel zum Boden 21 geführter, aus der Schließstellung in die Offenstellung steuerbarer Verschlußschieber 27. Der in Führungsrichtung aus der Schließstellung in die Offenstellung von einer Stellkraft, nämlich einer Feder 28, beaufschlagte Verschlußschieber 27 ist in Fig. 3 durch Riegelglieder 29 in der Schließstellung gehalten. Diese Riegelglieder 29 lösen im Brandfall aus und geben die Bewegung des Verschlußschiebers 27 in die Offenstellung frei. Zur Betätigung der Riegelglieder 29 sind im Ausführungsbeispiel nach Fig. 3 auf Wärme ansprechende Stellglieder 30 vorgesehen. Diese Stellglieder 30 betätigen zusätzliche Riegelglieder 31, die als Teil der Halteeinrichtung 12 für die Schottwände 10 diese in den Taschen 9 festhalten. In Fig. 4 sind die Stellglieder 30 für sich in einem Schnitt dargestellt. Sie umfassen erste und zweite Zylinderkolbenanordnungen 30.1, 30.2. Bei den ersten Zylinderkolbenanordnungen 30.1 ist je ein Zylinderraum 32 mit einem sich in der Wärme stark ausdehnenden Treibmaterial, beispielsweise Aluminiumhydroxid, gefüllt. Der jeweils andere Zylinderraum 33 enthält ein druckübertragendes, insbesondere hydraulisches Medium und ist über dieses Medium durch Öffnungen 34 mit einem Zylinderraum 35 der zweiten Zylinderkolbenanordnung 30.2 verbunden. Deren Kolben 36 ist gegen die Kraft des Mediums durch eine Vorspannfeder 37 abgestützt. Die Kolben 38 der ersten Zylinderkolbenanordnung 30.1 betätigen die Riegelglieder 31 für die Schottwände 10, der Kolben 36 der zweiten Zylinderkolbenanordnung 30.2 die Riegelglieder 29 für den Verschlußschieber 37. Erfährt das Treibmaterial unter Wärmeeinwirkung Volumenvergrößerungen, bewegen sich die Kolben 38 der ersten Zylinderkolbenanordnungen 30.1 in Richtung gegen die zwischen ihnen angeordnete zweite Zylinderkolbenanordnung 30.2, wobei das druckübertragende Medium durch die Öffnungen 34 in den Zylinderraum 35 der zweiten Zylinderkolbenanordnung 30.2 strömt und deren Kolben 36 in der Darstellung nach Fig. 4 gegen die Kraft der Vorspannfeder 37 abwärts bewegt. Im Ergebnis lösen sich durch die Verstellung der Kolben 38 der ersten Zylinderkolbenanordnungen 30.1 zuerst die Riegelglieder 31 aus ihrem Eingriff an den Schottwänden 10 und anschließend durch die Verstellung des Kolbens 36 der zweiten Zylinderkolbenanordnung 30.2 das Riegelglied 29 aus seinem Eingriff am Boden 21 des Behältnisses 19, so daß sich der Verschlußschieber 27 in die Offenstellung verschieben kann. Ersichtlich sind alle Zylinderkolbenanordnungen 30.1, 30.2 in einem gemeinsamen Zylinderblock 39 ausgebildet, der im Ausführungsbeispiel sich im Verschlußschieber 27 über der Durchführungsöffnung 7 befindet, so daß er der im Brandfall in der Durchführungsöffnung 7 entstehenden Hitze unmittelbar ausgesetzt ist.

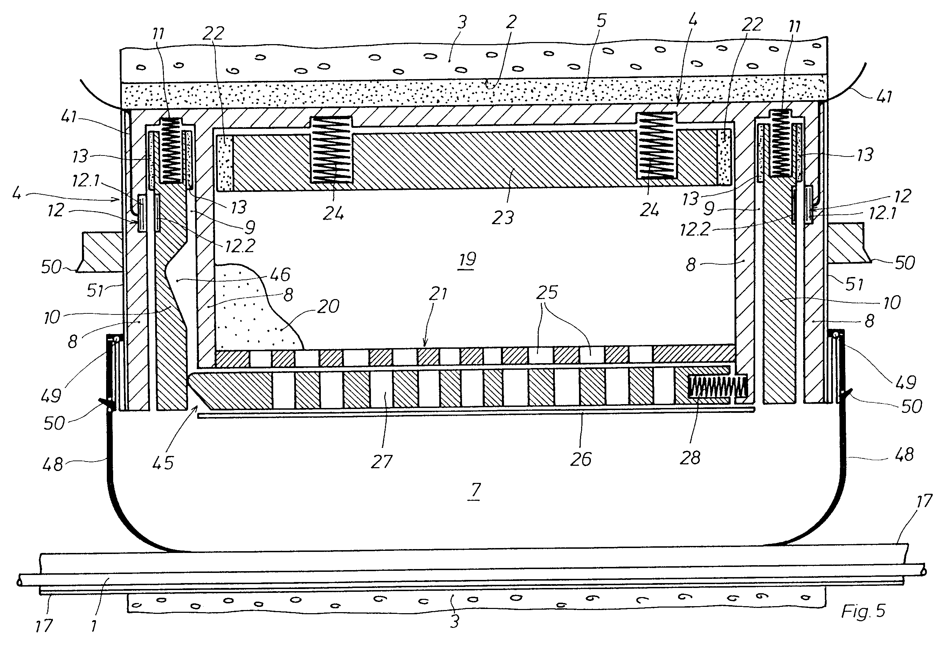

In den Ausführungsbeispielen nach den Fig. 1 und 5 dagegen bestehen die Halteeinrichtungen 12 für die Schottwände 10 aus am Schottkasten 4 angeordneten, auf elektrischem Wege betriebenen Haftmagneten 12.1 und aus an den Schottwänden 10 angeordneten Haftgegenplatten 12.2. So lange die Haftmagnete 12.1 mit Strom versorgt werden, halten sie die Haftgegenplatten 12.2 und damit die Schottwände 10 fest. Im elektrischen Versorgungskreis 41 der Haftmagnete 12.1 liegt ein nur in Fig. 1 dargestellter elektrischer Schalter 40, der durch auf Wärme und/oder Rauch ansprechende Brandmelder gesteuert werden kann und der bei seiner Betätigung die elektrische Versorgung der Haftmagnete 12.1 unterbricht, so daß die Haftmagnete 12.1 die Haftgegenplatten 12.2 frei geben und die Schottwände 10 aus den Taschen 9 in die Durchführungsöffnung 7 gelangen können. Die Brandmelder, insbesondere in der Ausführungsform als Rauchmelder, können entfernt vom Schottkasten 4 angeordnet und über elektrische Leitungen 42 mit dem elektrischen Schalter 40 verbunden sein. Zusätzlich zu solchen in der Zeichnung nicht dargestellten Brandmeldern oder statt dessen können auch an den Stirnwänden 8 des Schottkastens 4 Brandmelder 43 angeordnet sein, die einen sich in der Wärme ausdehnenden Stoff enthalten können, der durch seine Ausdehnung mechanisch den ebenfalls am Schottkasten 4 angeordneten elektrischen Schalter 40 steuert, wozu diese Brandmelder 43 mit dem elektrischen Schalter 40 in im einzelnen nicht näher dargestellter Weise durch Ausdehnungsleitungen oder Schaltgestänge 44 verbunden sein können. Die über Brandmelder gesteuerten Schottwände 10 dienen ihrerseits unmittelbar auch zur Steuerung des Verschlußschiebers 27. Dazu dient die in den Fig. 1 und 5 jeweils auf der linken Seite dargestellte Schottwand 10 als Anschlag für den Verschlußschieber 27, der durch eine Aussparung 45 in der Seitenwand 8 hindurch unmittelbar an der Schottwand 10 abgestützt ist. In der Schottwand 10 ist eine Einsenkung 46 vorgesehen, in die der Verschlußschieber 27 bei der Abwärtsverstellung der Schottwand 10 so tief eintreten kann, daß er sich aus der Schließstellung nach links in die Offenstellung verschieben kann, wenn die Schottwände 10 die Durchführungsöffnung 7 inzwischen stirnseitig geschlossen haben.

Auf beiden Seiten der Wand sind am Schottkasten 4 nach unten in die Durchführungsöffnung 7 hängende Schürzen 48 aus Glasvlies, Glasgewebe oder aus einem Kupferdrahtgewebe vorgesehen. Sie liegen mit dem unteren freien Rand auf den Leitungen 1 auf und können dort mit Fransen versehen sein, die zwischen die Leitungen 1 fallen. In jedem Fall dienen die Schürzen 48 dazu die Durchführungsöffnung 7 in Leitungslängsrichtung nach außen zugdicht abzudecken. Die Schürzen 48 können im Bereich ihres den Leitungen 1 aufliegenden Randes, gegebenenfalls einschließlich ihrer Fransen, in Leitungsrichtung einwärts gebogen sein. An den Stirnwänden 8 des Schottkastens 4 sind sie in Gelenken 49 gehalten, in denen sie nach außen und oben gegen die Stirnwände 8 verschwenkbar sind. In der hochgeschwenkten Stellung können die Schürzen 48 durch gemeinsam einen Rastsitz bildende Halteteile 50 fixiert werden, so daß sie nicht stören, wenn in der Durchführungsöffnung 7 Leitungsarbeiten vorgenommen werden.

Im einzelnen enthält das schütt- oder rieselfähige Intumeszenzmaterial 15, 20 im Behältnis 19 des Schottkastens 4 und/oder in den Hohlräumen 14 der Schottwände 10 Siliziumdioxid SiO₂ mit einer Zumischung aus Aluminiumhydroxid Al(OH)₃. Die Schottwände 10, der Boden 21 des Behältnisses 19, der Verschlußschieber 27 und die Querplatte 23 sind als harte Formteile aus ebenfalls in der Hitze aufschäumendem Brandschutzmaterial ausgebildet. Der Schottkasten 4 besteht einschließlich der Stirnwände 8 aus einem Werkstoff auf der Basis von Calciumsilikat, wobei die Stirnwände 8 an der Außenseite mit einem Hitzeschild 51, insbesondere aus Aluminiumfolie, belegt sind. Die Abdichtung 5 des Schottkastens 4 gegen die Wand 3 erfolgt durch elastische Matten aus Brandschutz-Schaumstoff.

## Patentansprüche

1. Vorrichtung zur Brandabschottung einer Wandöffnung (2) für die Durchführung von Leitungen (1), wie elektrische Kabel, Rohre oder dergl., durch eine Wand (3), bestehend aus einem abgedichtet gegen die Wand in der Wandöffnung (2) angeordneten, die Leitungen (1) in einer Durchführungsöffnung (7) aufnehmenden Schottkasten (4), ferner aus auf beiden Seiten der Wand (3) zum Abdecken der Durchführungsöffnung (7) vorgesehenen Schottwänden (10), und aus einem im Schottkasten (4) befindlichen Intumeszenzmaterial, das die Durchführungsöffnung (7) erst im Brandfall ausfüllt und dabei sein ursprüngliches Volumen infolge von Wärmeeinwirkung entsprechend vergrößert, dadurch gekennzeichnet, daß für jede Schottwand (10) eine quer zur Leitungsrichtung angeordnete, feststehende und die Durchführungsöffnung (7) frei lassende Stirnwand (8) mit einer zur Durchführungsöffnung (7) hin offenen Tasche (9) vorgesehen ist, daß in der Tasche (9) die als Formteil aus Intumeszenzmaterial ausgebildete Schottwand (10) bewegbar in die Durchführungsöffnung (7) hinein geführt und von einer in Führungsrichtung wirkenden Antriebskraft beaufschlagt ist, und daß für jede Schottwand (10) eine Halteeinrichtung (12) vorgesehen ist, welche die Schottwand (10) gegen die Wirkung der Antriebskraft in der Tasche (9) festhält und erst im Brandfall ihre Bewegung aus der Tasche (9) in die Durchführungsöffnung (7) freigibt, wobei diese Freigabe bei niedrigerer Temperatur erfolgt als die Volumenvergrößerung des Intumeszenzmaterials.

2. Vorrichtung nach Anspruch 1, dadurch gekennzeichnet, daß sich die Schottwände (10) auch in ihrer Endstellung, in der sie am weitesten in die Durchführungsöffnung (7) hinein vorstehen, noch mit den Stirnwänden (8) in den Taschen (9) teilweise überlappen, und daß im Überlappungsbereich Abdichtungen (13) zwischen der Schottwand (10) und der Stirnwand (8) vorgesehen sind.

3. Vorrichtung nach Anspruch 1 oder 2, dadurch gekennzeichnet, daß die Taschen (9) für die Schottwände (10) oberhalb der Durchführungsöffnung (7) angeordnet und die Schottwände (10) in den Taschen (9) in senkrechter Richtung verschiebbar sind.

4. Vorrichtung nach Anspruch 3, dadurch gekennzeichnet, daß die Schottwände (10) mit Hohlräumen (14) versehen sind, die aus Feststoff bestehendes Intumeszenzmaterial (15) von schütt- oder rieselfähiger Beschaffenheit enthalten, und daß sich die Hohlräume (14) beim Austreten der Schottwände (10) aus den Taschen (9) nach unten selbsttätig öffnen und das Intumeszenzmaterial (15) in die Durchführungsöffnung (7) austreten lassen.

5. Vorrichtung nach Anspruch 4, dadurch gekennzeichnet, daß die Menge des Intumeszenzmaterials (15) in den Hohlräumen (14) so groß ist, daß es bei vollständig in die Durchführungsöffnung (7) vorstehenden Schottwänden (10) die Durchführungsöffnung (7) im Bereich jeder Schottwand (10) bis mindestens zur Höhe des unteren Schottwandrandes (18) ausfüllt.

6. Vorrichtung nach einem der Ansprüche 1 bis 5, dadurch gekennzeichnet, daß der Schottkasten (4) zwischen den Stirnwänden (8) als Behältnis (19) ausgebildet ist, das aus Feststoff bestehendes Intumeszenzmaterial (20) von schütt- oder rieselfähiger Beschaffenheit enthält, und daß der die Durchführungsöffnung (7) nach oben begrenzende Boden (21) des Behältnisses (19) sich im Brandfall öffnet und das Intumeszenzmaterial (20) nach unten in die Durchführungsöffnung (7) austreten läßt, wobei die Öffnung des Bodens (21) schon bei niedrigerer Temperatur als die Volumenvergrößerung des Intumeszenzmaterials (20) erfolgt.

7. Vorrichtung nach Anspruch 6, dadurch gekennzeichnet, daß die Öffnung des Bodens (21) erst anschließend an die Freigabe der Schottwände (10) erfolgt.

8. Vorrichtung nach Anspruch 6 oder 7, dadurch gekennzeichnet, daß die Menge des Intumeszenzmaterials (20) im Behältnis (19) so groß ist, daß es bei geöffnetem Boden (21) die Durchführungsöffnung (7) schon vor seiner Volumenvergrößerung bis mindestens zur Höhe des Bodens (21) ausfüllt.

9. Vorrichtung nach einem der Ansprüche 6 bis 8, dadurch gekennzeichnet, daß der Innenraum des Behältnisses (19) die Gestalt eines aufrechten Prismas besitzt und eine den Prismenquerschnitt ausfüllende, im Innenraum verschiebbar geführte Querplatte (23) aufnimmt, die auf dem schütt- oder rieselfähigen Intumeszenzmaterial (20) anliegt und sich beim Öffnen des Bodens (21) mit dem sich im Behältnis (19) absenkenden Intumeszenzmaterial (20) abwärts bewegt.

10. Vorrichtung nach Anspruch 9, dadurch gekennzeichnet, daß die Querplatte (23) ein aus hartem Brandschutz-Material bestehendes Formteil ist und unter der Wirkung einer abwärts gerichteten Federkraft (24) steht.

11. Vorrichtung nach einem der Ansprüche 6 bis 10, dadurch gekennzeichnet, daß der Boden (21) mit über seine gesamte Fläche raster- oder siebartig angeordneten Austrittsöffnungen (25) für das schütt- oder rieselfähige Intumeszenzmaterial (20) versehen und zum Öffnen und Schließen der Austrittsöffnungen (25) ein am Schottkasten (4) parallel zum Boden (21) geführter, aus der Schließstellung in die Offenstellung steuerbarer Verschlußschieber (27) vorgesehen ist.

12. Vorrichtung nach Anspruch 11, dadurch gekennzeichnet, daß der in Führungsrichtung aus der Schließstellung in die Offenstellung von einer Stellkraft (28) beaufschlagte Verschlußschieber (27) durch Riegelglieder (29) in der Schließstellung gehalten ist, die im Brandfall ausgelöst werden und die Bewegung des Verschlußschiebers (27) in die Offenstellung freigeben.

13. Vorrichtung nach Anspruch 12, dadurch gekennzeichnet, daß zur Betätigung der Riegelglieder (29) auf Wärme und/oder Rauch ansprechende Stellglieder (30) vorgesehen sind.

14. Vorrichtung nach Anspruch 13, dadurch gekennzeichnet,daß die Stellglieder (30) zusätzliche Riegelglieder (31) betätigen, die als Teil der Halteeinrichtung (12) für die Schottwände (10) diese in den Taschen (9) festhalten.

15. Vorrichtung nach Anspruch 14, dadurch gekennzeichnet, daß die Stellglieder (30) erste und zweite Zylinderkolbenanordnungen (30.1, 30.2) umfassen, daß bei den ersten Zylinderkolbenanordnungen (30.1) je ein Zylinderraum (32) mit einem sich in der Wärme stark ausdehnenden Treibmaterial gefüllt ist und der jeweils andere Zylinderraum (33) über ein druckübertragendes Medium mit einem Zylinderraum (35) einer der zweiten Zylinderkolbenanordnung (30.2) in Verbindung steht, deren Kolben (36) gegen die Kraft des Mediums durch eine Vorspannfeder (37) abgestützt ist, und daß die Kolben (38) der ersten Zylinderkolbenanordnungen (30.1) die Riegelglieder (31) für die Schottwände (10) und die Kolben (36) der zweiten Zylinderkolbenanordnungen (30.2) die Riegelglieder (29) für den Verschlußschieber (27) betätigen.

16. Vorrichtung nach Anspruch 15, dadurchgekennzeichnet, daß die ersten und zweiten Zylinderkolbenanordnungen (30.1, 30.2) in einem gemeinsamen Zylinderblock (39) ausgebildet sind.

17. Vorrichtung nach einem der Ansprüche 1 bis 13, dadurch gekennzeichnet, daß die Halteeinrichtung (12) aus am Schottkasten (4) angeordneten, elektrisch versorgten Haftmagneten (12.1) und aus an den Schottwänden (10) angeordneten Haftgegenplatten (12.2) bestehen, wobei im Versorgungskreis der Haftmagnete (12.1) ein elektrischer Schalter (40) liegt, der durch auf Wärme und/oder Rauch ansprechende Brandmelder steuerbar ist.

18. Vorrichtung nach Anspruch 17, dadurch gekennzeichnet,daß die Brandmelder, insbesondere in der Ausführungsform als Rauchmelder, entfernt vom Schottkasten (4) angeordnet und über elektrische Leitungen (42) mit dem elektrischen Schalter (40) verbunden sind.

19. Vorrichtung nach Anspruch 17 oder 18, dadurch gekennzeichnet, daß an den Stirnwänden (8) des Schottkastens (4) Brandmelder (43) angeordnet sind, die einen sich in der Wärme ausdehnenden Stoff enthalten, der durch seine Ausdehnung mechanisch den ebenfalls am Schottkasten (4) angeordneten elektrischen Schalter (40) steuert.

20. Vorrichtung nach Anspruch 12 und einem der Ansprüche 17 bis 19, dadurch gekennzeichnet, daß eine der Schottwände (10) als Riegelglied für den Verschlußschieber (27) dient, wozu der Verschlußschieber (27) durch einen Anschlag in der Schließstellung gehalten ist, der von der Schottwand (10) gebildet ist und die Bewegung des Verschlußschiebers (27) in die Offenstellung freigibt, wenn sich die Schottwand (10) in die Durchführungsöffnung (7) verstellt.

21. Vorrichtung nach Anspruch 20, dadurch gekennzeichnet, daß der Verschlußschieber (27) durch eine Aussparung (45) in der Seitenwand (8) hindurch unmittelbar an der Schottwand (10) abgestützt ist, und daß in der Schottwand (10) eine Einsenkung (46) vorgesehen ist, in die der Verschlußschieber (27) bei der Abwärtsverstellung der Schottwand (10) so tief eintreten kann, wie es für seine Verstellung in die Offenstellung erforderlich ist.

22. Vorrichtung nach einem der Ansprüche 1 bis 21, dadurch gekennzeichnet, daß auf beiden Seiten der Wand (2) am Schottkasten (4) nach unten in die Durchführungsöffnung (7) hängende Schürzen (48) vorgesehen sind, die mit dem unteren freien Rand auf den Leitungen (1) liegen, und die die Durchführungsöffnung (7) in Leitungsrichtung nach außen abdecken.

23. Vorrichtung nach Anspruch 22, dadurch gekennzeichnet, daß die Schürzen (48) im Bereich ihres den Leitungen (1) aufliegenden Randes in Leitungsrichtung einwärts gebogen sind.

24. Vorrichtung nach Anspruch 22 oder 23, dadurch gekennzeichnet, daß die Schürzen (48) an den Stirnwänden (8) des Schottkastens (4) in Gelenken (49) gehalten sind, in denen die Schürzen (48) nach außen und oben gegen die Stirnwände (8) verschwenkbar sind.

25. Vorrichtung nach einem der Ansprüche 22 bis 24, dadurch gekennzeichnet, daß die Schürzen (48) aus einem Glasvlies oder Glasgewebe bestehen.

26. Vorrichtung nach einem der Ansprüche 22 bis 24, dadurch gekennzeichnet, daß die Schürzen (48) aus einem Kupferdrahtgewebe bestehen.

27. Vorrichtung nach Anspruch 25 oder 26, dadurch gekennzeichnet,daß die Schürzen (48) an ihrem unteren Rande zwischen die Leitungen (1) fallende Fransen tragen.

28. Vorrichtung nach einem der Ansprüche 1 bis 27, dadurch gekennzeichnet, daß das schütt- oder rieselfähige Intumeszenzmaterial (15, 20) im Behältnis (19) des Schottkastens (4) und/oder in den Hohlräumen (14) der Schottwände (10) Siliziumdioxid SiO₂ und eine Beimischung aus Aluminiumhydroxid Al(OH)₃ enthält.

29. Vorrichtung nach Anspruch 28, dadurch gekennzeichnet, daß das Intumeszenzmaterial (20) im Behältnis (19) aus mehreren, bei ihrer Mischung miteinander aufschäumenden Stoffkomponenten besteht und im Behältnis (19) für die einzelnen Stoffkomponenten voneinander abgeteilte Kammern ausgebildet sind.

30. Vorrichtung nach einem der Ansprüche 1 bis 29, dadurch gekennzeichnet, daß die Schottwände (10), der Boden (21) des Behältnisses (19), der Verschlußschieber (27) und die Querplatte (23) als harte Formteile aus in der Hitze aufschäumendem Brandschutzmaterial ausgebildet sind.

31. Vorrichtung nach einem der Ansprüche 1 bis 30, dadurch gekennzeichnet,daß der Schottkasten (4) einschließlich der Stirnwände (8) aus einem Werkstoff auf der Basis von Calciumsilikat besteht.

32. Vorrichtung nach einem der Ansprüche 1 bis 31, dadurch gekennzeichnet, daß die Stirnwände (8) an der Außenseite mit einem Hitzeschild (50), insbesondere aus Aluminiumfolie, belegt sind.

33. Vorrichtung nach einem der Ansprüche 1 bis 32, dadurch gekennzeichnet, daß der Schottkasten (4) gegen die Wand (2) durch zwischen beiden angeordnete eleastische Matten (5) aus Brandschutz-Schaumstoff abgedichtet ist.

## Claims

1. Apparatus for the fire-resistant closure of a wall opening (2) for the passage of conduits (1) such as electrical cables, pipes or the like through a wall (3), comprising a partitioning casing (4) which is arranged in the wall opening (2) in sealed relationship with the wall and which accommodates the conduits (1) in a passage opening (7), partitioning walls (10) which are provided on both sides of the wall (3) for covering the passage opening (7), and an intumescence material which is disposed in the partitioning casing (4) and which fills the passage opening (7) only in a fire situation and in so doing correspondingly increases its original volume as a result of the effect of heat, characterised in that for each partitioning wall (10) there is provided a fixed end wall (8) which is arranged transversely relative to the conduit direction and which leaves the passage opening (7) free and which has a pocket (9) that is open towards the passage opening (7), that the partitioning wall (10) which is in the form of a shaped portion of intumescence material is guided in the pocket (9) movably into the passage opening (7) and is acted upon by a drive force acting in the guidance direction, and that provided for each partitioning wall (10) is a holding means (12) which holds the partitioning wall (10) fast in the pocket (9) against the effect of the drive force and which permits movement thereof out of the pocket (9) into the passage opening (7) only in a fire situation, such release occurring at a lower temperature than the increase in volume of the intumescence material.

2. Apparatus according to claim 1 characterised in that the partitioning walls (10) also partially overlap with the end walls (8) in the pockets (9) in the end position of the partitioning walls in which they project furthest into the passage opening (7) and that sealing means (13) are provided in the overlap region between the partitioning wall (10) and the end wall (8).

3. Apparatus according to claim 1 or claim 2 characterised in that the pockets (9) for the partitioning walls (10) are arranged above the passage opening (7) and the partitioning walls (10) are displaceable in a perpendicular direction in the pockets (9).

4. Apparatus according to claim 3 characterised in that the partitioning walls (10) are provided with cavities (14) which contain intumescence material (15) which comprises solid substance and which is of a pourable or friable nature, and that the cavities (14) automatically open upon issue of the partitioning walls (10) out of the pockets (9) in a downward direction and allow the intumescence material (15) to issue into the passage opening (7).

5. Apparatus according to claim 4 characterised in that the amount of the intumescence material (15) in the cavities (14) is so great that, when the partitioning walls (10) completely project into the passage opening (7), the intumescence material fills the passage opening (7) in the region of each partitioning wall (10) at least to the level of the lower partitioning wall edge (18).

6. Apparatus according to one of claims 1 to 5 characterised in that the partitioning casing (4) is in the form between the end walls (8) of a container (19) which contains intumescence material (20) comprising solid substance and of pourable or friable nature and that the bottom (21) of the container (19), which defines the passage opening (7) upwardly, opens in a fire situation and allows the intumescence material (20) to discharge downwardly into the passage opening (7), wherein opening of the bottom (21) already occurs at a lower temperature than the increase in volume of the intumescence material (20).

7. Apparatus according to claim 6 characterised in that opening of the bottom (21) occurs only subsequently to release of the partitioning walls (10).

8. Apparatus according to claim 6 or claim 7 characterised in that the amount of the intumescence material (20) in the container (19) is so great that, when the bottom (21) is opened, it already fills the passage opening (7) prior to its increase in volume at least to the level of the bottom (21).

9. Apparatus according to one of claims 6 to 8 characterised in that the interior of the container (19) is in the shape of an upright prism and accommodates a transverse plate (23) which fills the prism cross-section and which is guided displaceably in the interior and which lies on the pourable or friable intumescence material (20) and moves downwardly when the bottom (21) opens with the intumescence material (20) as it moves downwardly in the container (19).

10. Apparatus according to claim 9 characterised in that the transverse plate (23) is a shaped portion comprising hard fire-protection material and is subjected to the action of a downwardly directed spring force (24).

11. Apparatus according to one of claims 6 to 10 characterised in that the bottom (21) is provided with discharge openings (25) for the pourable or friable intumescence material (20), the discharge openings being arranged in a grid-like or sieve-like configuration over the entire area of the bottom, and a closure slider (27) which is guided on the partitioning casing (4) parallel to the bottom (21) and which is controllable from the closed position to the open position is provided for opening and closing of the discharge openings (25).

12. Apparatus according to claim 11 characterised in that the closure slider (27) which is urged by a control force (28) in the guidance direction from the closed position into the open position is held in the closed position by lock members (29) which are released in a fire situation and permit movement of the closure slider (27) into the open position.

13. Apparatus according to claim 12 characterised in that there are provided control members (30) which are responsive to heat and/or smoke for actuation of the lock members (29).

14. Apparatus according to claim 13 characterised in that the control members (30) actuate additional lock members (31) which as part of the holding means (12) for the partitioning walls (10) hold same fast in the pockets (9).

15. Apparatus according to claim 14 characterised in that the control members (30) comprise first and second piston-cylinder arrangements (30.1, 30.2), that in the case of the first piston-cylinder arrangements (30.1) a respective cylinder chamber (32) is filled with a propellant material which expands greatly in the heat and the respective other cylinder chamber (33) is communicated by way of a pressure-transmitting medium to a cylinder chamber (35) of one of the second piston-cylinder arrangements (30.2) whose piston (36) is supported against the force of the medium by a biasing spring (37), and that the pistons (38) of the first piston-cylinder arrangements (30.1) actuate the lock members (31) for the partitioning walls (10) and the pistons (36) of the second piston-cylinder arrangements (30.2) actuate the lock members (29) for the closure slider (27).

16. Apparatus according to claim 15 characterised in that the first and second piston-cylinder arrangements (30.1, 30.2) are provided in a common cylinder block (39).

17. Apparatus according to one of claims 1 to 13 characterised in that the holding means (12) comprises electrically powered adhesion magnets (12.1) arranged on the partitioning casing (4) and adhesion counterplates (12.2) arranged on the partitioning walls (10), wherein the supply circuit of the adhesion magnets (12.1) includes an electrical switch (40) which is controllable by fire detectors responsive to heat and/or smoke.

18. Apparatus according to claim 17 characterised in that the fire detectors, in particular in the form of smoke detectors, are arranged remote from the partioning casing (4) and are connected to the electrical switch (40) by way of electric lines (42).

19. Apparatus according to claim 17 or claim 18 characterised in that arranged on the end walls (8) of the partitioning casing (4) are firs detectors (43) which contain a substance which expands in the heat and which by virtue of its expansion mechanically controls the electrical switch (40) which is also arranged on the partitioning casing (4).

20. Apparatus according to claim 12 and one of claims 17 to 19 characterised in that one of the partitioning walls (10) serves as a lock member for the closure slider (27), for which purpose the closure slider (27) is held in the closed position by an abutment which is formed by the partitioning wall (10) and permits movement of the closure slider (27) into the open position when the partitioning wall (10) moves into the passage opening (7).

21. Apparatus according to claim 20 characterised in that the closure slider (27) is directly supported against the partitioning wall (10) through an opening (45) in the side wall (8) and that provided in the partitioning wall (10) is a recess (46) into which the closure slider (27), in the downward displacement of the partitioning wall (10), can engage to such a depth as is required for displacement thereof into the open position.

22. Apparatus according to one of claims 1 to 21 characterised in that disposed on both sides of the wall (2) on the partitioning casing (4) are aprons (48) which hang downwardly into the passage opening (7) and which lie with the lower free edges on the conduits (1) and which cover the passage opening (7) relative to the exterior in the direction of the conduits.

23. Apparatus according to claim 22 characterised in that the aprons are cured inwardly in the direction of the conduits in the region of their edges which lie on the conduits (1).

24. Apparatus according to claim 22 or claim 23 characterised in that the aprons (48) are held to the end walls (8) of the partitioning casing (4) at pivots (49) at which the aprons (48) are pivotal outwardly and upwardly against the end walls (8).

25. Apparatus according to one of claims 22 to 24 characterised in that the aprons (48) comprise a glass cloth or a glass fleece.

26. Apparatus according to one of claims 22 to 24 characterised in that the aprons (48) comprise a copper wire mesh.

27. Apparatus according to claim 25 or claim 26 characterised in that at their lower edges the aprons (48) bear fringes which fall between the conduits (1).

28. Apparatus according to one of claims 1 to 27 characterised in that the pourable or friable intumescence material (15, 20) in the container (19) of the partitioning casing (4) and/or in the cavities (14) of the partitioning walls (10) contains silicon dioxide SiO₂ and an addition of aluminium hydroxide Al(OH)₃.

29. Apparatus according to claim 28 characterised in that the intumescence material (20) in the container (19) comprises a plurality of components which foam up when they are mixed together and chambers which are divided from each other are provided in the container (19) for the individual components.

30. Apparatus according to one of claims 1 to 29 characterised in that the partitioning walls (10), the bottom (21) of the container (19), the closure slider (27) and the transverse plate (23) are in the form of hard shaped portions of fire-protection material which foams up in the heat.

31. Apparatus according to one of claims 1 to 30 characterised in that the partitioning casing (4) including the end walls (8) comprises a calcium silicate-based material.

32. Apparatus according to one of claims 1 to 31 characterised in that the end walls (8) are covered at the outside with a heat shield (50), in particular of aluminium foil.

33. Apparatus according to one of claims 1 to 32 characterised in that the partitioning casing (4) is sealed relative to the wall (2) by elastic mats (5) of fire-protection foam, which are arranged between the partitioning casing and the wall.

## Revendications

1. Dispositif coupe-feu placé dans l'ouverture d'une paroi (2) pour le passage de conduits (1) comme câbles électriques, tubes ou équivalent à travers une paroi (3), comportant un caisson étanche (4) qui est placé protégé contre la paroi dans l'ouverture de la paroi (2) et qui reçoit les conduits (1) dans une ouverture de traversée (7), comportant d'autre part des parois étanches (10) placées des deux côtés de la paroi (3) et destinées à recouvrir l'ouverture de traversée (7), et comportant un matériau à intumescence contenu dans le caisson étanche (4), qui ne remplit l'ouverture de traversée (7) qu'en cas d'incendie en augmentant son volume initial en conséquence sous l'effet de la chaleur, caractérisé en ce qu'on prévoit pour chaque paroi étanche (10) une paroi d'extrémité (8) placée perpendiculairement au sens des conduits, fixe et laissant libre l'ouverture de traversée (7), comportant une poche (9) ouverte dans le sens de l'ouverture de traversée (7) et que la poche (9), la paroi étanche (10) conçue sous forme de pièce usinée constituée de matériau à intumescence, peut être déplacée et glisser dans l'ouverture de traversée (7) et est commandée par une force motrice agissant dans le sens de guidage et que pour chaque paroi étanche (10) un dispositif de retenue (12) est prévu qui bloque la paroi étanche (10) dans la poche (9) contre l'effet de la force motrice et ne la laisse sortir de la poche (9) pour s'introduire dans l'ouverture de traversée (7) qu'en cas d'incendie, cette libération s'effectuant à une température inférieure à celle nécessaire à l'augmentation de volume du matériau à intumescence.

2. Dispositif selon la revendication 1, caractérisé en ce que les parois étanches (10), même dans leur position extrême dans laquelle elles font saillie le plus loin possible dans l'ouverture de traversée (7), chevauchent encore partiellement avec les parois d'extrémité (8) dans les poches (9), et que dans la zone de chevauchement des isolants (13) entre la paroi étanche (10) et la paroi d'extrémité (8) sont prévus.

3. Dispositif selon la revendication 1 ou 2, caractérisé en ce que les poches (9) pour les parois étanches (10) sont disposées au-dessus de l'ouverture de traversée (7) et que les parois étanches (10) sont déplaçables dans les poches (9) dans le sens vertical.

4. Dispositif selon la revendication 3, caractérisé en ce que les parois étanches (10) sont pourvues d'espaces creux (14) qui contiennent du matériau à intumescence (15) solide apte à être déversé ou écoulé, et que les espaces creux (14) s'ouvrent automatiquement vers le bas lorsque les parois étanches (10) sortent des poches (9) et laissent le matériau à intumescence (15) pénétrer dans l'ouverture de traversée (7).

5. Dispositif selon la revendication 4, caractérisé en ce que la quantité de matériau à intumescence (15) contenu dans les espaces creux (14) est telle qu'il remplit l'ouverture de traversée (7) au niveau de chaque paroi étanche (10) au minimum jusqu'à la hauteur du bord inférieur (18) de la paroi étanche (10), lorsque les parois étanches (10) sont complètement rentrées dans l'ouverture de traversée (7).

6. Dispositif selon l'une des revendications 1 à 5, caractérisé en ce que le caisson étanche (4) entre les parois d'extrémité (8) se présente sous forme de récipient (19) qui comporte du matériau à intumescence (20) solide apte à être déversé ou écoulé et en ce que le fond (21) du récipient (19) qui limite l'ouverture de traversée (7) vers le haut, s'ouvre en cas d'incendie et laisse sortir le matériau à intumescence (20) vers le bas dans l'ouverture de traversée (7), l'ouverture du fond (21) s'effectuant déjà à une température inférieure à celle nécessaire à l'augmentation de volume du matériau à intumescence (20).

7. Dispositif selon la revendication 6, caractérisé en ce que le fond (21) ne s'ouvre qu'après la libération des parois étanches (10).

8. Dispositif selon la revendication 6 ou 7, caractérisé en ce que la quantité de matériau à intumescence (20) dans le récipient (19) est telle qu'il remplit, lorsque le fond (21) est ouvert, l'ouverture de traversée (7) dès avant l'augmentation de son volume au minimum jusqu'à la hauteur du fond (21).

9. Dispositif selon l'une des revendications 6 à 8, caractérisé en ce que l'intérieur du récipient (19) a la forme d'un prisme droit et reçoit une plaque transversale (23) remplissant la section transversale du prisme et déplaçable dans l'espace intérieur, qui est posée sur le matériau à intumescence (20) apte à être déversé ou écoulé et qui, lors de l'ouverture du fond (21), descend vers le bas avec le matériau à intumescence (20) qui baisse dans le récipient (19).

10. Dispositif selon la revendication 9, caractérisé en ce que la plaque transversale (23) est une pièce usinée en matière ignifuge solide et qu'elle est soumise à l'action d'un ressort (24) dirigée vers le bas.

11. Dispositif selon l'une des revendications 6 à 10, caractérisé en ce que le fond (21) est pourvu sur toute sa surface d'orifices de sortie (25) disposés sous forme de grille ou de tamis, pour le matériau à intumescence (20) apte à être déversé ou écoulé, et que pour ouvrir et fermer les orifices de sortie (25) une barre de verrouillage (27) est placée parallèle au fond (21) sur le caisson étanche (4), dont le passage de la position fermée à la position ouverte peut être commandé.

12. Dispositif selon la revendication 11, caractérisé en ce que la barre de verrouillage (27), dont le passage de la position fermée à la position ouverte dans le sens de guidage est commandé par un couple de commande, est maintenue dans la position fermée par des doigts de verrouillage (29) qui se déclenchent en cas d'incendie et libèrent le passage de la barre de verrouillage (27) dans la position ouverte.

13. Dispositif selon la revendication 12, caractérisé en ce que des actionneurs (30) répondant à la chaleur et/ou la fumée sont prévus pour commander les doigts de verrouillage (29).

14. Dispositif selon la revendication 13, caractérisé en ce que les actionneurs (30) commandent des doigts de verrouillage supplémentaires (31) qui, en tant qu'éléments du dispositif de retenue (12) pour les parois étanches (10), maintiennent celles-ci dans les poches (9).

15. Dispositif selon la revendication 14, caractérisé en ce que les actionneurs (30) comportent des premiers et seconds ensembles cylindre/piston (30.1, 30.2), que dans les premiers ensembles cylindre-piston (30.1) respectivement une chambre de cylindre (32) est remplie avec un agent d'expansion qui se dilate fortement sous l'effet de la chaleur et l'autre chambre de cylindre (33) respective reliée par un agent échangeur de pression à une chambre de cylindre (35) de l'un des seconds ensembles cylindre-piston (30.2) dont le piston (36) est soutenu contre la force de l'agent par un ressort précontraint (37), et que les pistons (38) des premiers ensembles cylindre/piston (30.1) actionnent les doigts de verrouillage (31) pour les parois étanches (10) et les pistons (36) des seconds ensembles cylindre-piston (30.2) actionnent les doigts de verrouillage (29) pour la barre de verrouillage (27).

16. Dispositif selon la revendication 15, caractérisé en ce que les premiers et seconds ensembles cylindre-piston (30.1, 30.2) se présentent sous forme d'un bloc-cylindres commun (39).

17. Dispositif selon l'une des revendications 1 à 13, caractérisé en ce que le dispositif de retenue (12) comporte des aimants (12.1) alimentés par l'énergie électrique placés sur le caisson étanche (4) et des contre-plaques aimantées (12.2) placées sur les parois étanches (10) et que dans le circuit d'alimentation des aimants (12.1) est disposé un interrupteur électrique (40) qui est commandé par des avertisseurs d'incendie répondant à la chaleur et/ou la fumée.

18. Dispositif selon la revendication 17, caractérisé en ce que les avertisseurs d'incendie, notamment sous le mode de réalisation d'avertisseurs de fumée, sont placés à distance du caisson étanche (4) et reliés à l'interrupteur électrique (40) par des câbles électriques (42).

19. Dispositif selon la revendication 17 ou 18, caractérisé en ce que sur les parois d'extrémité (8) du caisson étanche (4) sont disposés des avertisseurs d'incendie (43) qui contiennent une substance qui se dilate sous l'effet de la chaleur et qui, par la dilatation, commande mécaniquement l'interrupteur électrique (40) disposé lui aussi sur le caisson étanche (4).

20. Dispositif selon la revendication 12 et l'une des revendications 17 à 19, caractérisé en ce qu'une des parois étanches (10) sert de doigt de verrouillage pour la barre de verrouillage (27), la barre de verrouillage (27) étant à cet effet maintenue en position fermée par une butée qui est formée par la paroi étanche (10) et qui libère la barre de verrouillage (27) lui permettant ainsi de passer en position ouverte lorsque la paroi étanche (10) se déplace dans l'ouverture de traversée (7).

21. Dispositif selon la revendication 20, caractérisé en ce que la barre de verrouillage (27) prend directement appui sur la paroi étanche (10) par un évidement (45) dans la paroi latérale (8) et que dans la paroi étanche (10) est prévu un enfoncement (46), dans lequel la barre de verrouillage (27) lors de l'abaissement de la paroi étanche (10) peut s'introduire aussi profondément que nécessaire à son passage en position ouverte.

22. Dispositif selon l'une des revendications 1 à 21, caractérisé en ce que sur le caisson étanche (4) des deux côtés de la paroi (2) sont prévus des tabliers (48) tombant vers le bas dans l'ouverture de traversée (7), dont le bord inférieur libre touche les conduits (1) et qui protègent l'ouverture de traversée (7) dans le sens des conduits vers l'extérieur.

23. Dispositif selon la revendication 22, caractérisé en ce que les tabliers (48) sont pliés dans le sens des conduits vers l'intérieur dans la partie où leur bord touche les conduits (1).

24. Dispositif selon la revendication 22 ou 23, caractérisé en ce que les tabliers (48) sont tenus sur les parois d'extrémité (8) du caisson étanche (4) dans des articulations (49), dans lesquelles les tabliers (48) peuvent basculer vers l'extérieur et vers le haut contre les parois d'extrémité (8).

25. Dispositif selon l'une des revendications 22 à 24, caractérisé en ce que les tabliers (48) sont en matte de fibres de verre, en tissu de fibres de verre ou en tissu en fils de cuivre.

26. Dispositif selon l'une des revendications 22 à 24, caractérisé en ce que les tabliers (48) sont en tissu en fils de cuivre.

27. Dispositif selon la revendication 25 ou 26, caractérisé en ce que les tabliers (48) présentent sur leur bord inférieur des franges qui tombent entre les conduits (1).

28. Dispositif selon l'une des revendications 1 à 27, caractérisé en ce que le matériau à intumescence (15, 20) apte à être déversé ou écoulé contenu dans le récipient (19) du caisson étanche (4) et/ou dans les espaces creux (14) des parois étanches (10) contient du dioxyde de silicium SiO₂ et un additif d'hydroxyde d'aluminium Al(OH)₃.

29. Dispositif selon la revendication 28, caractérisé en ce que le matériau à intumescence (20) contenu dans le récipient (19) contient plusieurs composants de substance qui moussent lorsqu'on les mélange et pour qui des compartiments séparés sont aménagés dans le récipient (19).

30. Dispositif selon l'une des revendications 1 à 29, caractérisé en ce que les parois étanches (10), le fond (21) du récipient (19), la barre de verrouillage (27) et la plaque transversale (23) se présentent sous forme de pièces usinées rigides en matière ignifuge moussant sous l'effet de la chaleur.

31. Dispositif selon l'une des revendications 1 à 30, caractérisé en ce que le caisson étanche (4), y compris les parois d'extrémité (8), sont constitués d'une matière à base de silicate de calcium.

32. Dispositif selon l'une des revendications 1 à 31, caractérisé en ce que la face extérieure des parois d'extrémité (8) est recouverte d'un écran thermique (50), notamment en feuille d'aluminium.

33. Dispositif selon l'une des revendications 1 à 32, caractérisé en ce que l'espace entre le caisson étanche (4) et la paroi (2) est rendu étanche à l'aide de mats souples (5) en mousse ignifuge disposés entre les deux.
